# EUROPÄISCHE PATENTANMELDUNG

(11) **EP 4 641 470 A1**
(43) Veröffentlichungstag der Anmeldung: **29.10.2025**
(21) Anmeldenummer: 25172730.1
(22) Anmeldetag: 25.04.2025
(51) Int. Cl.: G06Q 30/0242, G06Q 30/0251, G06Q 30/0241

(54) **PLATZIEREN EINER WERBEEINBLENDUNG AUF EINER WEBSEITE**

(30) Priorität: 26.04.2024 DE 102024111877
(71) Anmelder: P. Variablis GmbH, 47608 Geldern (DE)
(72) Erfinder: Zühlsdorff, Torsten, 47608 Geldern (DE)
(74) Vertreter: Michalski Hüttermann & Partner Patentanwälte mbB

(57) **Zusammenfassung**

Die Erfindung betrifft ein computerimplementiertes Verfahren zum Platzieren einer Werbeeinblendung auf einer Webseite, mit folgenden Verfahrensschritten:
Erfassen wenigstens eines Teils des jeweiligen Inhalts einer Mehrzahl von Webseiten,
Transformieren der erfassten Inhalte der erfassten Webseiten, um eine Beschreibung des Inhalts einer jeweiligen Webseite zu erhalten,
Erstellen von Webseiten-Gruppen, die Webseiten mit solchen Beschreibungen des jeweiligen Inhalts enthalten, die zueinander wenigstens in einem vorbestimmten Maß ähnlich sind,
Platzieren der gleichen Werbeeinblendung auf einer Mehrzahl von Webseiten einer ersten Webseiten-Gruppe und einer zweiten Webseiten-Gruppe,
Erfassen der Anzahl von Klicks auf die Werbeeinblendung auf der Mehrzahl von Webseiten der ersten Webseiten-Gruppe und Erfassen der Anzahl von Klicks auf die Werbeeinblendung auf der Mehrzahl von Webseiten der zweiten Webseiten-Gruppe,
Vergleichen der Anzahl von Klicks auf die Werbeeinblendung auf der Mehrzahl von Webseiten der ersten Webseiten-Gruppe und der Anzahl von Klicks auf die Werbeeinblendung auf der Mehrzahl von Webseiten der zweiten Webseiten-Gruppe und
weiteres Nutzen der Werbeeinblendung auf der Mehrzahl von Webseiten der Webseiten-Gruppe, für die die höhere Anzahl von Klicks auf die Werbeeinblendung erfasst worden ist, und Beenden des Nutzens der Werbeeinblendung auf der Mehrzahl von Webseiten der Webseiten-Gruppe, für die die geringere Anzahl von Klicks auf die Werbeeinblendung erfasst worden ist.

Auf diese Weise wird ein Verfahren zum Platzieren einer Werbeeinblendung auf einer Webseite bereitgestellt, das mit geringeren Resourcen ausführbar ist.

## Beschreibung

Die Erfindung betrifft ein computerimplementiertes Verfahren zum Platzieren einer Werbeeinblendung auf einer Webseite.

Die Auswahl eines geeigneten Werbemittels für einen Benutzer, der eine bestimmte Unterseite einer Internetseite besucht, stellt eine herausfordernde Aufgabe dar. Internetseiten bestehen aus zahlreichen Unterseiten, von denen jede eine spezifische Zielgruppe anspricht. Die Effektivität von Werbemitteln ist am größten, wenn sie auf die Zielgruppe einer Unterseite abgestimmt sind und im Kontext des Inhalts dieser Unterseite präsentiert werden. Die Kernherausforderung bei der Auswahl geeigneter Werbemittel besteht darin, dass mehrere entscheidende Informationen benötigt werden: Erstens sollten der Inhalt und die Botschaft des Werbemittels klar definiert sein. Zweitens sollte der Kontext der besuchten Webseite bestimmt werden, was aufgrund der Vielfalt und Komplexität der Inhalte schwierig sein kann. Drittens sollten detaillierte Informationen über den Besucher wie Interessen, Alter und Kaufverhalten vorliegen.

Jedoch stehen bei der Beschaffung dieser Informationen mehrere Einschränkungen im Weg. Die Inhalte von Werbemitteln können unbekannt sein, die Bearbeitung von Bildern und Videos kann aufwändig sein, und manchmal sind die Formate, die verarbeitet werden können, weniger wirksam, wie zum Beispiel reiner Text. Außerdem könnten zusätzliche Daten wie die Position des Werbemittels auf der Webseite oder Ladezeiten die Verarbeitungsmöglichkeiten überschreiten. Der Kontext einer Webseite, besonders bei News-Seiten, kann schwierig zu erfassen und oft sehr vielfältig sein. Zudem erschwert die Notwendigkeit der Einholung einer Einwilligung gemäß der Datenschutz-Grundverordnung (DSGVO) für die Erhebung von Besucherdaten die Aufgabe erheblich und kann die Wirksamkeit der bisherigen Methoden ohne diese Zustimmung deutlich reduzieren. Diese Herausforderungen verdeutlichen, wie komplex die Aufgabe ist, ein geeignetes Werbemittel für den aktuellen Nutzer auf einer spezifischen Unterseite zu bestimmen.

Das Problem, ein geeignetes Werbemittel für eine aktuell besuchte Webseite mit ihren bestimmten Inhalten für den aktuellen Benutzer mit seinen bestimmten Interessen zu finden, umfasst also mehrere komplexe Herausforderungen: Moderne Werbesysteme sollten Zugang zu einer Vielzahl von Datenquellen haben, einschließlich Nutzerverhaltensdaten, Browsing-Historie, demografischen Daten und Informationen über frühere Interaktionen mit Werbemitteln. Diese Daten sollten in Echtzeit verarbeitet und analysiert werden, um relevante Werbung zu schalten, was eine erhebliche technologische Infrastruktur erfordert. Außerdem sollte die Werbung nicht nur für den Nutzer relevant sein, sondern auch im Kontext der besuchten Webseite passen. Die Herausforderung besteht darin, einen Werbeinhalt zu finden, der sowohl mit den Interessen des Nutzers als auch mit dem Thema der Webseite harmoniert, um Dissonanzen zu vermeiden und die Benutzererfahrung zu verbessern. Nutzerinteressen können vielschichtig und dynamisch sein, was die präzise Identifizierung der aktuellen Interessen eines Benutzers erschwert. Werbesysteme sollten außerdem in der Lage sein, aus vergangenen Interaktionen zu lernen und diese Informationen mit dem aktuellen Kontext zu kombinieren, um die aktuellen Interessen genau zu bestimmen.

Wie oben bereits angesprochen, kann die Nutzung von Nutzerdaten zur Personalisierung von Werbung auch hinsichtlich des Datenschutzes und der Privatsphäre problematisch sein. Die Einhaltung von Datenschutzgesetzen (wie der DSGVO in der Europäischen Union) und die Gewährleistung der Nutzerakzeptanz durch transparente Praktiken sind entscheidend, um Vertrauen aufzubauen und rechtliche Risiken zu vermeiden. Außerdem erschwert es die zunehmende Verwendung von Ad-Blockern durch Nutzer teilweise, überhaupt Werbung anzuzeigen. Selbst wenn eine Werbung angezeigt wird, gibt es keine Garantie dafür, dass sie vom Nutzer auch wahrgenommen wird. Das Finden kreativer und akzeptabler Wege, Werbung zu präsentieren, ohne das Nutzererlebnis zu stören, ist eine fortlaufende Herausforderung. Die Effektivität von Werbemitteln zu messen und zu optimieren, ist daher schwierig und komplex. Es geht nicht nur darum, ob ein Nutzer auf eine Anzeige klickt, sondern auch um die langfristige Wirkung auf das Markenimage und die Kaufentscheidungen. Werbetreibende müssen fortlaufend Testen und Daten analysieren, um die Performance zu verbessern.

Außerdem ist das Internet ein sich ständig verändernder Raum, in dem Trends und Nutzerinteressen schnell wechseln können. Ein Werbesystem sollte also flexibel genug sein, um sich dynamisch an diese Veränderungen anzupassen und kontinuierlich verbesserte Werbemittel zu liefern. Im Ergebnis erfordert die Auswahl des möglichst richtigen Werbemittels für einen bestimmten Nutzer auf einer bestimmten Webseite eine sorgfältige Balance zwischen Relevanz, Nutzerakzeptanz, Datenschutz und technologischer Effizienz, um sowohl die Nutzererfahrung zu verbessern als auch die Werbeziele zu erreichen.

Die US 2004/0059708 A1 beschreibt ein System und ein Verfahren zur Bereitstellung von kontextbezogener Werbung auf Webseiten. Es wird erläutert, wie relevante Anzeigen basierend auf dem Inhalt einer Webseite ausgewählt und platziert werden können, was dem Grundprinzip von AdSense entspricht. In der US 2005/0108232 A1 wird ein Verfahren zur Optimierung der Anzeigenschaltung beschrieben, bei dem Nutzerinteraktionen und andere Parameter berücksichtigt werden, um die Effektivität der Anzeigen zu maximieren. Die US 2006/0242075 A1 behandelt Verfahren zur Analyse von Webseiteninhalten, um passende Anzeigen auszuwählen. Es wird ein Algorithmus vorgestellt, der den Inhalt einer Seite bewertet und entsprechende Werbeanzeigen zuordnet. In der US 2008/0077465 A1 wird ein System zur Verwaltung von Anzeigenbudgets und Geboten in Echtzeit beschrieben, das es Werbetreibenden ermöglicht, ihre Ausgaben effizient zu steuern und die Platzierung ihrer Anzeigen zu optimieren. Die US 2009/0112714 A1 beschreibt ein Verfahren zur Verbesserung der Klickrate von Anzeigen durch Anpassung des Anzeigendesigns und der Platzierung basierend auf Nutzerverhalten und -präferenzen.

Außerdem beschriebt die US 2024/0086975 A1 die Erfassung, Erzeugung, Verteilung und Verwaltung von Online-Webinhalten. Die hierin beschriebenen Geräte, Systeme und Methoden können zum Sammeln und Erzeugen von Online-Webinhalten und Kommunikation verwendet werden. Insbesondere können die hier beschriebenen Geräte und Systeme eingesetzt werden, um eine oder mehrere Marketing- und/oder Werbekampagnen zu erstellen sowie die Effizienz, Effektivität und Durchführbarkeit der Kampagne im Hinblick auf die Erzeugung von Nutzerbeteiligung zu überwachen, zu verwalten und zu definieren und dadurch die Kostenvorteile der Kampagne genau zu bestimmen. Die zur Verfügung gestellten Analyseergebnisse können dann dazu verwendet werden, die Generierung von Original-Webinhalten zu steuern, z. B. zur Verbesserung der Kunden- oder Follower-Erfahrung, zur Förderung des Geschäfts und zur Durchführung von Werbekampagnen. Alternativ können öffentlich zugängliche Webinhalte, die sich als erfolgreich erwiesen haben, reproduziert, referenziert oder anderweitig im Zusammenhang mit der Förderung oder Präsentation der Webinhalte des Nutzers herangezogen werden.

Problematisch ist, dass die weiter oben beschriebenen Anforderungen bisher nur mit erheblichem Aufwand an Rechenleistung und Speicherbedarf erzielbar sind.

Davon ausgehend ist es die Aufgabe der Erfindung, ein Verfahren zum Platzieren einer Werbeeinblendung auf einer Webseite anzugeben, das mit geringeren Resourcen ausführbar ist.

Diese Aufgabe wird durch den Gegenstand des Patentanspruchs 1 gelöst. Bevorzugte Weiterbildungen finden sich in den Unteransprüchen.

Erfindungsgemäß wird somit ein computerimplementiertes Verfahren zum Platzieren einer Werbeeinblendung auf einer Webseite bereitgestellt, mit folgenden Verfahrensschritten:
Erfassen wenigstens eines Teils des jeweiligen Inhalts einer Mehrzahl von Webseiten,
Transformieren der erfassten Inhalte der erfassten Webseiten, um eine Beschreibung des Inhalts einer jeweiligen Webseite zu erhalten,
Erstellen von Webseiten-Gruppen, die Webseiten mit solchen Beschreibungen des jeweiligen Inhalts enthalten, die zueinander wenigstens in einem vorbestimmten Maß ähnlich sind,
Platzieren der gleichen Werbeeinblendung auf einer Mehrzahl von Webseiten einer ersten Webseiten-Gruppe und einer zweiten Webseiten-Gruppe,
Erfassen der Anzahl von Klicks auf die Werbeeinblendung auf der Mehrzahl von Webseiten der ersten Webseiten-Gruppe und Erfassen der Anzahl von Klicks auf die Werbeeinblendung auf der Mehrzahl von Webseiten der zweiten Webseiten-Gruppe in einem vorbestimmten Zeitraum,
Vergleichen der Anzahl von Klicks auf die Werbeeinblendung auf der Mehrzahl von Webseiten der ersten Webseiten-Gruppe und der Anzahl von Klicks auf die Werbeeinblendung auf der Mehrzahl von Webseiten der zweiten Webseiten-Gruppe und
weiteres Nutzen der Werbeeinblendung auf der Mehrzahl von Webseiten der Webseiten-Gruppe, für die die höhere Anzahl von Klicks auf die Werbeeinblendung erfasst worden ist, und Beenden des Nutzens der Werbeeinblendung auf der Mehrzahl von Webseiten der Webseiten-Gruppe, für die die geringere Anzahl von Klicks auf die Werbeeinblendung erfasst worden ist.

Vorliegend ist davon die Rede, dass die gleiche Werbeeinblendung auf einer Mehrzahl von Webseiten einer ersten Webseiten-Gruppe und einer zweiten Webseiten-Gruppe platziert wird. Aber die Erfindung ist freilich nicht darauf beschränkt, dass nur eine einzige Werbeeinblendung auf einer jeweiligen Webseite verwendet wird. Vielmehr können auch eine Mehrzahl von Werbeeinblendungen verwendet werden, wobei dann neben den Klicks auf diese Werbeeinblendungen aber auch die Anzahl der Werbeeinblendungen bekannt sein muss, um damit auf eine Klickrate schließen zu können.

Die Erfindung macht sich dabei das Folgende zu Nutze: In der Regel existieren für einzelne Unterseiten nicht genügend Besucher, um eine statistisch relevante Aussage über die dort angezeigten Werbemittel zu treffen. Allerdings existieren für die Themen fast aller Unterseiten in der Regel immer auch andere Webseiten mit ähnlichem Inhalt. Durch die Bildung virtueller Gruppen zu thematisch ähnlichen Inhalten und/oder die Bildung von virtuellen Gruppen für thematisch ähnliche Werbemitteln, können übergreifende Tests der Werbemittel-Wirksamkeit durchgeführt werden.

Das erfindungsgemäße Verfahren, insbesondere die Nutzung einer Gruppierungen ohne Nutzerdaten, hat einige erhebliche Vorteile. Bei herkömmlichen Verfahren müssen sehr große Mengen von personenbezogenen Daten erhoben werden. Ohne diese Erhebung ist dies nicht mehr erforderlich. Der Speicherplatzbedarf sinkt damit erheblich, da keine personenbezogenen Daten sowie deren Historie mehr hinterlegt werden müssen. Der erforderliche Speicherplatzbedarf korreliert also nur mit der Anzahl der Webseiten und ist entsprechend endlich. Bei den herkömmlichen Verfahren müssen historische Daten über das Nutzerverhalten angelegt werden, deren Menge potenziell unendlich lange steigen kann. Außerdem wird durch die Reduktion der zu verarbeitenden Datenmenge erheblich weniger Arbeitsspeicher benötigt. Zusätzlich wird durch die Reduktion der Datenmenge sowie durch die Vereinfachung der Datenstruktur die Berechnung vereinfacht und somit erheblich beschleunigt. Dafür ausschlaggebend ist nicht zuletzt, dass virtuelle Gruppen weniger strukturintensiv und uniformer sind als heterogene Tracking-Events mit beliebigen personenbezogenen Daten, wie sie bei herkömmlichen Verfahren verwendet werden.

Die Berechnung kann im Übrigen noch weiter beschleunigt werden, wenn eine solche Datenstruktur z. B. durch GPUs verarbeitet wird, die bekanntermaßen deutlich schneller arbeiten können, als CPUs. GPU-Computing, auch bekannt als GPGPU (General-Purpose Computing on Graphics Processing Units), bezieht sich auf die Nutzung von Grafikprozessoren (GPUs) für allgemeine Rechenaufgaben, die über die traditionelle Grafikbearbeitung hinausgehen. Der Einsatz von GPUs kann die Leistung bei geeigneten Aufgaben um Größenordnungen gegenüber reinen CPU-basierten Lösungen verbessern. Daher ist GPU-Computing zu einem entscheidenden Faktor in Bereichen geworden, in denen große Datenmengen verarbeitet oder komplexe Berechnungen durchgeführt werden müssen, was die Forschung und Entwicklung in vielen wissenschaftlichen und technischen Feldern beschleunigt hat. Ursprünglich für die Verarbeitung komplexer Grafikanwendungen und den Render-Prozess in Videospielen entwickelt, haben GPUs eine Architektur, die sich durch eine hohe Parallelität auszeichnet. Dies macht sie besonders effizient für die vorliegende Erfindung erforderlichen Algorithmen, die gleichzeitig viele Operationen auf Datensätzen ausführen müssen. Im Gegensatz zu Zentralprozessoren (CPUs), die wenige Kerne mit hoher Taktrate für sequenzielle Verarbeitungsaufgaben enthalten, verfügen GPUs über hunderte oder tausende von Kernen, die gleichzeitig an unterschiedlichen Teilen eines Problems arbeiten können. Diese Eigenschaft macht GPUs besonders geeignet für parallelisierbare Berechnungen, wie im Fall der vorliegenden Erfindung.

Das Erfassen wenigstens eines Teils des jeweiligen Inhalts einer Mehrzahl von Webseiten kann z. B. mittels eines Web-Crawlers erfolgen oder über eine API oder auf sonstige Weise.

Kurz zu den Begrifflichkeiten bei der Beschreibung der vorliegenden Erfindung:
Eine Präsenz im Internet, z. B. eine Verkaufsplattform, eine Nachrichtenseite oder ein Blog, wird vorliegend mit Website bezeichnet. Diese Website beinhaltet in der Regel eine Mehrzahl von Unterseiten, vorliegend auch als Webseiten bezeichnet. Diese Webseiten haben Inhalte, wie Texte und Bilder, die z. B. mittels Kategorien beschreibbar sind. So kann jeder Webseite eine Beschreibung ihrer Einzelinhalte, also Teile ihres Inhalts, wie ein bestimmter Textabschnitt, aber auch eine Beschreibung ihres Gesamtinhalts zugeordnet werden.

Ein Web-Crawler, auch bekannt als Spider oder Searchbot, ist ein automatisiertes Programm, das das Internet durchsucht, um Webseiten zu finden und zu indizieren. Der Prozess des Crawlings ist grundlegend für Suchmaschinen wie Google, Bing oder Yahoo, da er es ihnen ermöglicht, neue Inhalte zu entdecken und bestehende Inhalte zu aktualisieren, um eine umfangreiche Datenbank von Webseiten zu erstellen, die dann durchsucht werden kann. Web-Crawler beginnen in der Regel mit einer Liste von Webseitenadressen aus früheren Crawling-Vorgängen und sogenannten Sitemaps, die von Webseitenbetreibern zur Verfügung gestellt werden. Von diesen Ausgangspunkten aus folgen sie den Links auf den Seiten, um neue Seiten zu entdecken. Während sie die Seiten durchsuchen, sammeln sie Informationen von jeder Webseite, wie zum Beispiel den Textinhalt, die Meta-Tags und die Hyperlinks zu anderen Seiten. Diese Informationen werden dann in einem Index gespeichert, der die Grundlage für die Suchergebnisse der Suchmaschine bildet. Crawler sind häufig so konzipiert, dass sie das Web effizient und respektvoll durchsuchen. Sie folgen dann den Regeln, die in der Datei "robots.txt" auf Webservern festgelegt sind, um zu verstehen, welche Teile einer Webseite nicht gecrawlt werden sollen. Diese Regeln helfen dabei, den Server nicht mit Anfragen zu überlasten und sicherzustellen, dass sensitive oder irrelevante Informationen nicht in den Suchmaschinenindex aufgenommen werden. Im Kern ermöglichen Web-Crawler also, dass das Internet durchsuchbar und zugänglich wird, indem sie kontinuierlich Daten sammeln und aktualisieren, die die Basis für eine weitere Verarbeitung bilden.

Gemäß einer bevorzugten Weiterbildung der Erfindung erfolgt das Platzieren der gleichen Werbeeinblendung auf einer Mehrzahl von Webseiten einer ersten Webseiten-Gruppe und einer zweiten Webseiten-Gruppe, das Erfassen der Anzahl von Klicks auf die Werbeeinblendung auf der Mehrzahl von Webseiten der ersten Webseiten-Gruppe und das Erfassen der Anzahl von Klicks auf die Werbeeinblendung auf der Mehrzahl von Webseiten der zweiten Webseiten-Gruppe, das Vergleichen der Anzahl von Klicks auf die Werbeeinblendung auf der Mehrzahl von Webseiten der ersten Webseiten-Gruppe und der Anzahl von Klicks auf die Werbeeinblendung auf der Mehrzahl von Webseiten der zweiten Webseiten-Gruppe und das weitere Nutzen der Werbeeinblendung auf der Mehrzahl von Webseiten der Webseiten-Gruppe, für die die höhere Anzahl von Klicks auf die Werbeeinblendung erfasst worden ist und das Beenden des Nutzens der Werbeeinblendung auf der Mehrzahl von Webseiten der Webseiten-Gruppe, für die die geringere Anzahl von Klicks auf die Werbeeinblendung erfasst worden ist, wenigstens paarweise für eine Vielzahl von Webseiten durchgeführt wird. Wenn es vorliegend also heißt, dass das in Rede stehende Verfahren wenigstens paarweise für eine Vielzahl von Webseiten durchgeführt wird, so ist damit gemeint, dass nicht zur zwei Webseiten miteinander verglichen werden können, sondern auch ein Vergleich zwischen mehr als zwei Webseiten erfolgen kann, von denen eine gewisse Anzahl zur Weiternutzung der Werbeeinblendung ausgewählt wird, währen die Werbeeinblendung bei den anderen Webseiten beendet wird. Mit anderen Worten: Gemäß einer bevorzugten Ausgestaltung der Erfindung werden eine Vielzahl von Werbeeinblendungen daraufhin getestet, ob Sie von der Nutzergruppe einer bestimmten Art von Webseiten gut angenommen werden, wobei nur die erfolgreich angenommenen Werbeeinblendungen beibehalten werden.

Das Transformieren der erfassten Inhalte der erfassten Webseiten, um eine Beschreibung des Inhalts einer jeweiligen Webseite zu erhalten, kann auf unterschiedliche Weisen erfolgen. Vorzugsweise erfolgt das Transformieren der erfassten Inhalte der erfassten Webseiten, um eine Beschreibung des Inhalts einer jeweiligen Webseite zu erhalten, mittels eines Large Language-Modells.

Außerdem erfolgt die Beschreibung des Inhalts einer jeweiligen Webseite vorzugsweise darüber, dass ihr ein Vektor aus einem vorbestimmten Vektorraum zugeordnet wird, in dem linear unabhängige Vektoren solche Webseiten bezeichnen, deren Beschreibung des Inhalts nicht ähnlich zueinander sind.

Das Maß der Ähnlichkeit zwischen der Beschreibung des Inhalts zweier Webseiten erfolgt vorzugsweise mittels eines Vergleichs von Embeddings (Wordeinbettungen). Die Ermittlung der Ähnlichkeit von Texten durch die Erstellung und den Vergleich von Embeddings basiert auf dem Ansatz, Wörter, Sätze oder ganze Dokumente in Form von Vektoren in einem hochdimensionalen Raum darzustellen. Diese Vektordarstellungen fassen die semantische Bedeutung der Texteinheiten in einer Weise zusammen, die es ermöglicht, Ähnlichkeiten und Beziehungen zwischen ihnen mathematisch zu analysieren. Die Erstellung von Embeddings erfolgt vorzugsweise mit Hilfe von maschinellen Lernverfahren, insbesondere solchen, die auf neuronalen Netzen basieren. Diese Verfahren lernen aus großen Mengen an Textdaten, indem sie beispielsweise versuchen, ein Wort anhand seines Kontexts vorherzusagen oder umgekehrt. Durch diesen Lernprozess entwickeln die Modelle eine interne Repräsentation der Wörter als Vektoren, wobei ähnliche Wörter ähnliche Vektorrepräsentationen erhalten. Das bedeutet, dass Wörter mit ähnlichen Bedeutungen oder die in ähnlichen Kontexten verwendet werden, im Vektorraum nahe beieinander liegen.

Sobald Texte in Form von Vektoren repräsentiert sind, kann ihre Ähnlichkeit durch verschiedene mathematische Methoden bestimmt werden, am häufigsten durch die Berechnung des Kosinus der Winkel zwischen ihren Vektoren (Kosinus-Ähnlichkeit). Die Idee dabei ist, dass je ähnlicher die Bedeutung oder der Kontext zweier Texte ist, desto kleiner der Winkel zwischen ihren Vektoren im hochdimensionalen Raum sein wird. Ein Kosinus-Wert von 1 bedeutet eine perfekte Übereinstimmung (die Vektoren zeigen in die gleiche Richtung), während ein Wert von 0 darauf hindeutet, dass die Texte unabhängig voneinander sind (die Vektoren sind orthogonal zueinander). Auf diese Weise können beispielsweise Texte, die unterschiedliche Worte für dasselbe Konzept verwenden, dennoch als ähnlich identifiziert werden, was bei traditionellen Methoden der Textverarbeitung, die sich auf exakte Wortübereinstimmungen verlassen, nicht der Fall wäre.

Vorzugsweise wird also das Maß der Ähnlichkeit zwischen der Beschreibung des Inhalts zweier Webseiten über die Kosinus-Ähnlichkeit der Vektoren bestimmt, die den Inhalt der beiden Webseiten bezeichnen. Die zuvor schon angesprochene Kosinus-Ähnlichkeit ist ein Maß für die Ähnlichkeit zwischen zwei Vektoren im Raum, das unabhängig von ihrer Größe ist. Es wird häufig in verschiedenen Bereichen wie Informations-Retrieval, Text-Mining und maschinellem Lernen verwendet, um zu bewerten, wie ähnlich zwei Dokumente, Sätze oder beliebige Datenpunkte in ihrem Inhalt oder ihrer Orientierung sind, indem sie als Vektoren in einem mehrdimensionalen Raum dargestellt werden. Die Kosinus-Ähnlichkeit wird durch den Kosinus des Winkels zwischen zwei Vektoren berechnet. Der Wertebereich der Kosinus-Ähnlichkeit liegt zwischen -1 und 1, wobei 1 bedeutet, dass die Vektoren in die gleiche Richtung zeigen und somit vollständig ähnlich sind, 0 bedeutet, dass die Vektoren orthogonal (rechtwinklig) zueinander stehen und somit keine Ähnlichkeit aufweisen, und -1 bedeutet, dass die Vektoren in genau entgegengesetzte Richtungen zeigen. Mathematisch wird die Kosinus-Ähnlichkeit zwischen zwei Vektoren mit Hilfe des Skalarprodukts der Vektoren und der Längen (oder Normen) dieser Vektoren berechnet. Die Kosinus-Ähnlichkeit ist vorliegend besonders nützlich, da die Größe der Vektoren (z.B. gegeben durch die Länge von Textdokumenten) für die Frage der Ähnlichkeit des Inhalts von Webseiten in der Regel nicht relevant ist, sondern nur die Richtung der Vektoren relevant ist, um ihre inhaltliche Ähnlichkeit zu bestimmen.

In diesem Zusammenhang sei aber darauf hingewiesen, dass die vorliegende Erfindung nicht auf die Nutzung der Kosinus-Ähnlichkeit beschränkt ist. Vielmehr stehen als Maß der Ähnlichkeit zwischen der Beschreibung des Inhalts zweier Webseiten auch andere Verfahren zur Verfügung. Die Ähnlichkeit zwischen Webseiteninhalten lässt sich nämlich auf verschiedene Weise quantifizieren, wobei jedes Verfahren bestimmte Aspekte der Daten besonders berücksichtigt. Die Kosinus-Ähnlichkeit ist besonders effektiv, wenn es um die Winkelmessung zwischen Vektoren in hochdimensionalen Räumen geht, was sie ideal für Textvergleiche macht. Alternativ bietet die L2-Distanz (Euklidische Distanz) eine direkte Messung des geometrischen Abstands zwischen Punkten, während die L1-Distanz (Manhattan-Distanz) die Summe der absoluten Differenzen zwischen Koordinaten berechnet und bei Ausreißern robuster ist. Der innere Produktansatz misst die direkte Vektorübereinstimmung, was in bestimmten Kontexten nützlich sein kann. Die Hamming-Distanz, geeignet für binäre Daten, zählt die Anzahl unterschiedlicher Bits, und die Jaccard-Distanz misst die Ähnlichkeit von Mengen, ideal für Daten, die als Sets repräsentiert werden. Jedes dieser Verfahren hat ihre Vorzüge und eignet sich je nach Datenstruktur der Webseiten unterschiedlich gut.

Die Erfindung ermöglicht es auch, zusätzliche oder alternative Werbeeinblendungen effizient auf Webseiten zu platzieren. Dazu erfolgt gemäß einer bevorzugten Weiterbildung der Erfindung zusätzlich oder anstatt des weiteren Nutzens der Werbeeinblendung auf der Mehrzahl von Webseiten der Webseiten-Gruppe, für die die höhere Anzahl von Klicks auf die Werbeeinblendung erfasst worden ist, auf der Mehrzahl von Webseiten der Webseiten-Gruppe, für die die höhere Anzahl von Klicks auf die Werbeeinblendung erfasst worden ist, eine Werbeeinblendung, deren Beschreibung ihres Inhalts wenigstens in einem vorbestimmten Maß ähnlich zu der Beschreibung des Inhalts der bereits genutzten Werbeeinblendung ist. Auch hier gilt, dass vorzugsweise ein Transformieren des Inhalts der Werbeeinblendung mittels eines Large Language-Modells durchgeführt wird, um eine Beschreibung des Inhalts einer Werbeeinblendung zu erhalten.

Genauso wie bei den Webseiten, erfolgt die Beschreibung des Inhalts einer jeweiligen Werbeeinblendung vorzugsweise darüber, dass ihr ein Vektor aus einem vorbestimmten Vektorraum zugeordnet wird, in dem linear unabhängige Vektoren solche Werbeeinblendung bezeichnen, deren Beschreibung des Inhalts nicht ähnlich zueinander sind. Vorzugsweise wird dabei das Maß der Ähnlichkeit zwischen der Beschreibung des Inhalts zweier Werbeeinblendung über die Kosinus-Ähnlichkeit der Vektoren bestimmt, die den Inhalt der beiden Werbeeinblendung bezeichnen.

Nachfolgend wir die Erfindung anhand eines bevorzugten Ausführungsbeispiels unter Bezugnahme auf die Zeichnungen weiter im Detail erläutert.

In den Zeichnungen zeigen
- Fig. 1: schematisch drei verschieden Webseiten mit jeweils drei Unterseiten, auf die ein Verfahren gemäß einem Ausführungsbeispiel der Erfindung angewandt werden kann,
- Fig. 2: schematisch das Gruppieren von zwei Seiten aus den Webseiten aus Fig. 1 gemäß einem Ausführungsbeispiel der Erfindung,
- Fig. 3: schematisch das Gruppieren von zwei anderen Seiten aus den Webseiten aus Fig. 1 gemäß einem Ausführungsbeispiel der Erfindung und
- Fig. 4: schematisch den Ablauf eines Verfahrens gemäß einem Ausführungsbeispiel der Erfindung.

Häufig mangelt es einzelnen Unterseiten an ausreichend Besuchern, um fundierte, statistisch relevante Aussagen über die Effektivität der dort platzierten Werbemittel zu ermöglichen. Parallel dazu gibt es zu fast jedem Thema der Unterseiten zahlreiche andere Webseiten mit vergleichbarem Inhalt.

Indem man virtuelle Gruppen aus thematisch eng verwandten Inhalten bildet und ähnliche Ansätze für die Kategorisierung der Werbemittel anwendet, lässt sich eine umfassendere Bewertung der Wirksamkeit dieser Werbemittel erreichen. Durch diese Methode können wirksamkeitsbezogene Tests auf einer breiteren Datenbasis durchführen, die aussagekräftigere Ergebnisse liefert.

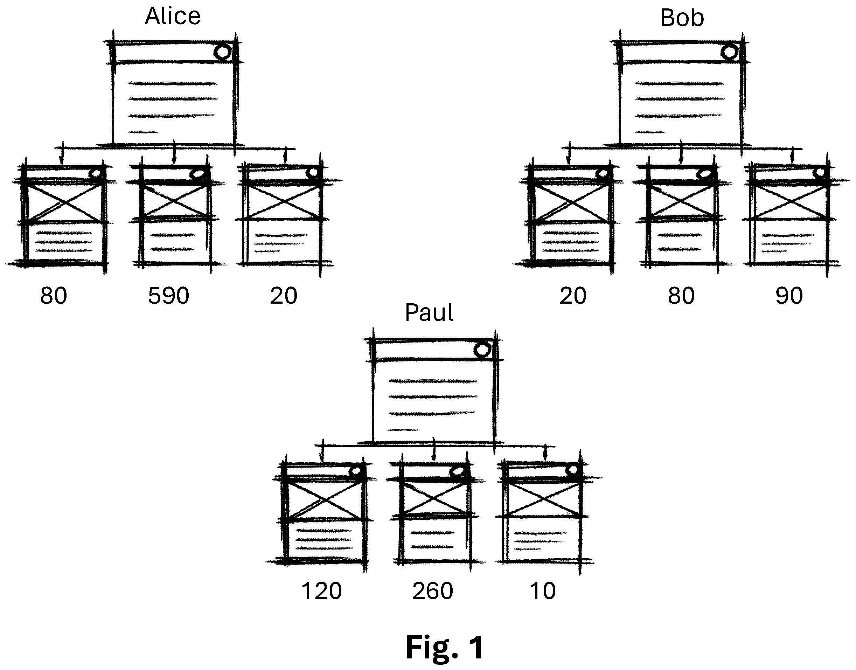

Das wird nachfolgend anhand eines Ausführungsbeispiels der Erfindung erläutert. Es existieren die folgenden drei Webseiten, die jeweils drei Unterseiten aufweisen, was schematisch in Fig. 1 dargestellt ist.

Webseite 1:
- Besitzer: Alice
- Unterseite 1: Welche Katzenhöhle ist die Beste? Besucher: 80
- Unterseite 2: Spazieren mit dem Hund - was gilt es zu beachten? Besucher: 590
- Unterseite 3: Warum Fische die besseren Haustiere sind! Besucher: 20

Webseite 2:
- Besitzer: Bob
- Unterseite 1: 10 Regeln für den Spaziergang mit dem besten Freund des Menschen, Besucher: 20
- Unterseite 2: Top 10 Orte für den Spaziergang, Besucher: 80
- Unterseite 3: Fische als bester Freund von Bello, Besucher 90

Website 3:
- Besitzer: Paul
- Unterseite 1: Ich liebe Fische! Du solltest es auch! Besucher: 120
- Unterseite 2: Warum Katzen so gefährlich sind! Besucher: 260
- Unterseite 3: Hunde sind ganz okay. Besucher 10

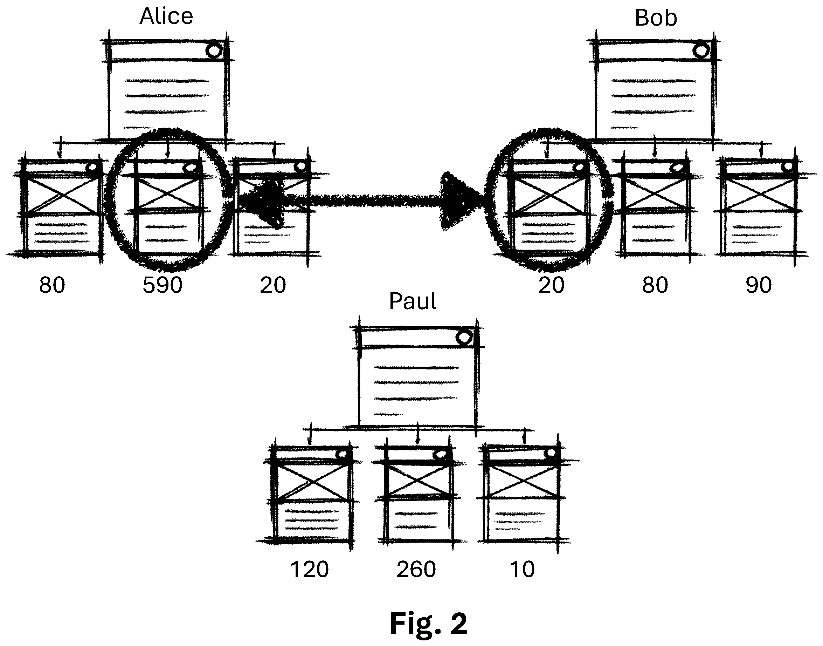

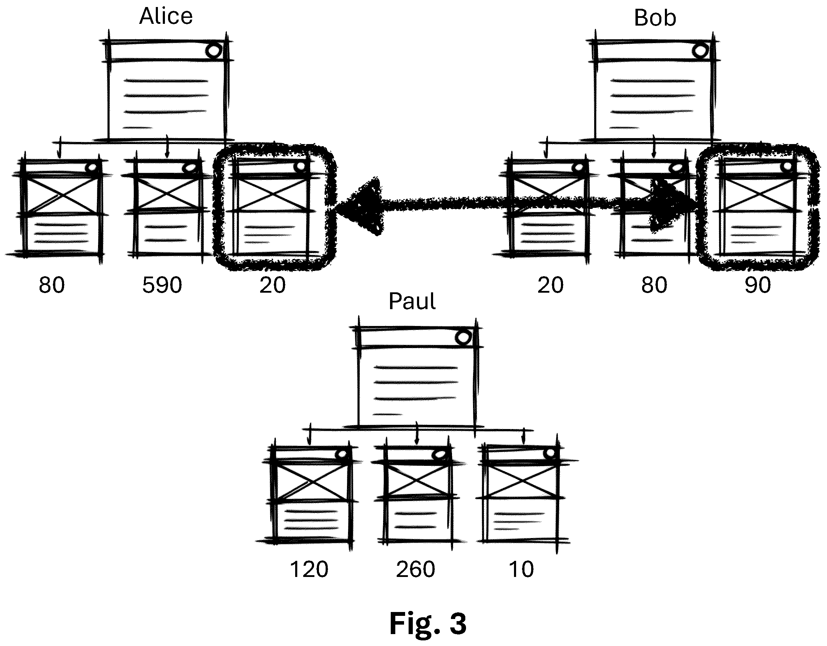

Bei der Annahme, dass mindestens 100 Besucher nötig sind, um eine statistisch relevante Aussage zu treffen, würden nur 3 der 9 Beispiele sinnvoll getestet werden können. Kombiniert man aber thematisch ähnliche Webseiten zu einer virtuellen Gruppe und spielt darin dasselbe Werbemittel aus, kann man eine statistisch relevante Aussage treffen. Die Unterseite 2 von Alice kombiniert mit der Unterseite 1 von Bob, wie in Fig. 2 dargestellt, erlaubt auch eine Aussage für die Unterseite 1 von Bob, obwohl dort bei weitem nicht genügend Besucher vorhanden sind, nämlich nur 20 anstatt der mindestens erforderlichen 100. Dieses Zusammenfassen von Webseiten, die inhaltlich thematisch ähnlich zueinander sind, in eine gemeinsame virtuelle Webseitengruppe, macht eine solche Aussage dann aber möglich. Entsprechendes gilt auch z. B. für die Unterseite 3 von Alice und die Unterseite 3 von Bob, die ebenfalls in eine gemeinsame virtuelle Webseitengruppe einsortiert werden können, wie in Fig. 3 dargestellt. Ohne ein solches Zusammenfassen in eine gemeinsame Gruppe könnte zu keiner der beiden Seiten hinsichtlich darin ausgespielter Werbemittel eine Aussage getroffen werden.

Werden im Übrigen mehrere virtuelle Gruppen zu einem Thema gebildet, kann die Wirksamkeit mehrerer Werbemittel gleichzeitig beurteilt werden. Dabei können auch auf derselben Seite mehrere Werbemittel getestet werden. Die zweite Unterseite von Alice hat z. B. so viele Besucher, dass fünf Werbemittel gleichzeitig geprüft werden können. Bei der zweiten Unterseite von Paul können immerhin zwei Werbemittel gleichzeitig geprüft werden.

Eine ähnliche Gruppierung kann für die Werbemittel selbst vorgenommen werden. Ist der Inhalt bekannt, können ähnliche Werbemittel in unterschiedlichen Gruppen auf Wirksamkeit getestet werden, um so eine Relation zwischen Werbemittel und Inhalt herzustellen. Ist der Inhalt unbekannt, kann ein Werbemittel zufällig in einer virtuellen Gruppe ausgespielt werden und die Wirksamkeit mit bekannter Wirksamkeit anderer Werbemittel abgeglichen werden. So kann die Ähnlichkeit zwischen unbekannten Werbemitteln ermittelt werden.

Die Nutzung dieser Gruppierung ohne Nutzerdaten hat einige erhebliche Vorteile, insbesondere weil für gewöhnlich sehr große Mengen von personenbezogenen Daten erhoben werden müssen. Ohne diese Erhebung entstehen die folgenden drei wesentlichen Vorteile:
1. Der Speicherplatzbedarf sinkt erheblich, da die personenbezogenen Daten sowie deren Historie nicht hinterlegt werden müssen. Der neue Speicherplatzbedarf korreliert also mit der Anzahl der Webseiten und ist entsprechend endlich. Bei den herkömmlichen Verfahren werden historische Daten über das Nutzerverhalten angelegt, welche potenziell im technischen Sinne unendlich sind.
2. Durch die Reduktion der zu verarbeitenden Datenmenge wird erheblich weniger Arbeitsspeicher benötigt.
3. Durch die Reduktion der Datenmenge sowie der Vereinfachung der Datenstruktur (da virtuelle Gruppen weniger strukturintensiv (und uniformer) sind als heterogene Tracking-Events mit beliebigen personenbezogenen Daten) wird die Berechnung vereinfacht und somit erheblich beschleunigt.

Daten über die Besucher selbst werden dabei nicht benötigt. Es reicht die Information über die Anzeige der Werbemittel, sowie über deren Erfolg. Mit den ermittelten Daten können Werbemittel für Besucher einer bestimmten Unterseite so ausgewählt werden, dass der Erfolg der Werbemittel besonders hoch ist. Dabei steigt die Genauigkeit der Anzeige mit jeder Anzeige und Interaktion bzw. dem Ausbleiben derselben. Als Auswahlverfahren gilt hier die Höhe des Erfolgs eines Werbemittels innerhalb einer virtuellen Gruppe. Entsprechend kann das Werbemittel erfolgreich auf allen Unterseiten angezeigt werden, die die virtuelle Gruppe bilden. Aussagen über neue Unterseiten sind ebenso möglich. Durch Berechnung der Ähnlichkeit bzw. Zugehörigkeit zu bestehenden virtuellen Gruppen können Werbemittel ohne weitere Tests erfolgreich angezeigt werden.

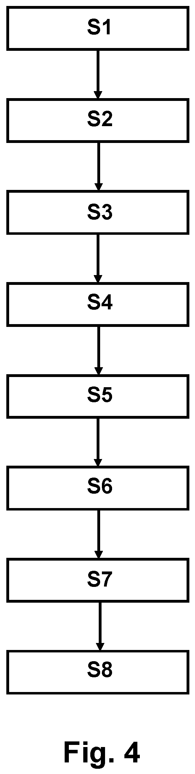

Unter Bezugnahme auf das Ablaufdiagramm in Fig. 4 stellt sich ein entsprechendes computerimplementiertes Verfahren zum Platzieren einer Werbeeinblendung auf einer Webseite z. B. wie folgt dar:
In Schritt S1 wird ein Teil des jeweiligen Inhalts einer Mehrzahl von Webseiten mittels eines Web-Crawlers erfasst.

In Schritt S2 wird der erfasste Inhalt der erfassten Webseiten mittels eines Large Language-Modells transformiert, um eine Beschreibung des Inhalts der jeweiligen Webseite zu erhalten, wobei die Beschreibung des Inhalts einer jeweiligen Webseite darüber erfolgt, dass ihr ein Vektor aus einem vorbestimmten Vektorraum zugeordnet wird, in dem linear unabhängige Vektoren solche Webseiten bezeichnen, deren Beschreibung des Inhalts nicht ähnlich zueinander sind.

In Schritt S3 werden Webseiten-Gruppen erstellt, die Webseiten mit solchen Beschreibungen des jeweiligen Inhalts enthalten, die zueinander wenigstens in einem vorbestimmten Maß ähnlich sind, wobei das Maß der Ähnlichkeit zwischen der Beschreibung des Inhalts zweier Webseiten über die Kosinus-Ähnlichkeit der Vektoren bestimmt wird, die den Inhalt der beiden Webseiten bezeichnen.

In Schritt S4 werden die gleichen Werbeeinblendung auf einer Mehrzahl von Webseiten einer ersten Webseiten-Gruppe und einer zweiten Webseiten-Gruppe platziert.

Dann wird in Schritt S5 die Anzahl von Klicks auf die Werbeeinblendung auf der Mehrzahl von Webseiten der ersten Webseiten-Gruppe und Erfassen der Anzahl von Klicks auf die Werbeeinblendung auf der Mehrzahl von Webseiten der zweiten Webseiten-Gruppe in einem vorbestimmten Zeitraum erfasst.

Anschließend erfolgt in Schritt S6 ein Vergleich der Anzahl von Klicks auf die Werbeeinblendung auf der Mehrzahl von Webseiten der ersten Webseiten-Gruppe und der Anzahl von Klicks auf die Werbeeinblendung auf der Mehrzahl von Webseiten der zweiten Webseiten-Gruppe.

Schließlich werden in Schritt S7 die Werbeeinblendung auf der Mehrzahl von Webseiten der Webseiten-Gruppe, für die die höhere Anzahl von Klicks auf die Werbeeinblendung erfasst worden ist, weiter genutzt und die Werbeeinblendung auf der Mehrzahl von Webseiten der Webseiten-Gruppe, für die die geringere Anzahl von Klicks auf die Werbeeinblendung erfasst worden ist, beendet.

Maßgeblich ist dabei, dass die Schritte S4 bis S7, also das Platzieren der gleichen Werbeeinblendung auf einer Mehrzahl von Webseiten einer ersten Webseiten-Gruppe und einer zweiten Webseiten-Gruppe (Schritt S4), das Erfassen der Anzahl von Klicks auf die Werbeeinblendung auf der Mehrzahl von Webseiten der ersten Webseiten-Gruppe und das Erfassen der Anzahl von Klicks auf die Werbeeinblendung auf der Mehrzahl von Webseiten der zweiten Webseiten-Gruppe (Schritt S5), das Vergleichen der Anzahl von Klicks auf die Werbeeinblendung auf der Mehrzahl von Webseiten der ersten Webseiten-Gruppe und der Anzahl von Klicks auf die Werbeeinblendung auf der Mehrzahl von Webseiten der zweiten Webseiten-Gruppe (Schritt S6) und das weitere Nutzen der Werbeeinblendung auf der Mehrzahl von Webseiten der Webseiten-Gruppe, für die die höhere Anzahl von Klicks auf die Werbeeinblendung erfasst worden ist, und das Beenden des Nutzens der Werbeeinblendung auf der Mehrzahl von Webseiten der Webseiten-Gruppe, für die die geringere Anzahl von Klicks auf die Werbeeinblendung erfasst worden ist (Schritt S7), immer genau paarweise für eine Vielzahl von Webseiten durchgeführt wird.

Möglich ist auch die Ergänzung des Verfahrens um einen zusätzlichen Schritt S8, gemäß dem zusätzlich oder anstatt des weiteren Nutzens der Werbeeinblendung auf der Mehrzahl von Webseiten der Webseiten-Gruppe, für die die höhere Anzahl von Klicks auf die Werbeeinblendung erfasst worden ist, auf der Mehrzahl von Webseiten der Webseiten-Gruppe, für die die höhere Anzahl von Klicks auf die Werbeeinblendung erfasst worden ist, eine Werbeeinblendung erfolgt, deren Beschreibung ihres Inhalts wenigstens in einem vorbestimmten Maß ähnlich zu der Beschreibung des Inhalts der bereits genutzten Werbeeinblendung ist, wobei um eine Beschreibung des Inhalts einer Werbeeinblendung zu erhalten, ein Transformieren des Inhalts der Werbeeinblendung, mittels des Large Language-Modells durchgeführt wird, die Beschreibung des Inhalts einer jeweiligen Werbeeinblendung darüber erfolgt, dass ihr ein Vektor aus einem vorbestimmten Vektorraum zugeordnet wird, in dem linear unabhängige Vektoren solche Werbeeinblendung bezeichnen, deren Beschreibung des Inhalts nicht ähnlich zueinander sind, und das Maß der Ähnlichkeit zwischen der Beschreibung des Inhalts zweier Werbeeinblendung über die Kosinus-Ähnlichkeit der Vektoren bestimmt wird, die den Inhalt der beiden Werbeeinblendung bezeichnen.

Abschließend sei noch mal auf die technischen Vorteile der vorliegenden Erfindung gegenüber herkömmlichen Verfahren, wie Google AdSense, eingegangen. Einer der zentralen Effekte liegt in der drastischen Reduzierung der Datenmenge bei gleichzeitig hoher Effizienz. Während Google AdSense bis zu 70 verschiedene Datenpunkte pro Nutzer erhebt, arbeitet die vorliegende Erfindung vorzugsweise lediglich mit drei Kerndatenpunkten: dem Kontext, der Anzahl der Anzeigenaufrufe und den Klicks auf die Anzeige. Dadurch wird die zu speichernde Datenmenge auf nur etwa fünf Prozent der von AdSense benötigten Kapazität reduziert. Diese Datenreduktion senkt nicht nur die Speicheranforderungen erheblich, sondern minimiert auch Datenschutzrisiken, da keinerlei personenbezogene Informationen verarbeitet werden.

Ein weiterer entscheidender Vorteil ist der deutlich geringere Speicherbedarf. Während Google AdSense allein in Deutschland täglich etwa 1,26 Terabyte an Daten speichert und weltweit ein Vielfaches davon benötigt, beschränkt sich die Erfindung in einer bevorzugten Ausgestaltung auf lediglich 0,06 Terabyte. Diese Einsparung reduziert nicht nur die Kosten für die IT-Infrastruktur erheblich, sondern verringert auch den Energieverbrauch signifikant.

Darüber hinaus verbessert die Erfindung die Verarbeitungsgeschwindigkeit der Daten erheblich. Die Analyse großer Datenmengen ist traditionell ein zeit- und ressourcenintensiver Prozess. Während die Ladezeit der AdSense-Daten auf herkömmlichen CPU-Servern mehr als 18 Stunden beträgt, kann die Datenverarbeitung gemäß der Erfindung auf einer GPU in nur vier Sekunden erfolgen. Dies ermöglicht nicht nur eine schnellere Anpassung von Werbeanzeigen, sondern steigert auch die Effizienz der gesamten Werbeausspielung.

Durch die erheblich geringeren Datenmengen und die optimierte Verarbeitung benötigt die Erfindung zudem weniger leistungsfähige Hardware. Dies führt zu einer Reduzierung der Anschaffungs- und Betriebskosten sowie einer längeren Lebensdauer der eingesetzten Server. Gleichzeitig sinkt der Energieverbrauch, was nicht nur wirtschaftliche, sondern auch ökologische Vorteile mit sich bringt. Insgesamt bietet die Erfindung damit eine nachhaltigere, effizientere und kostengünstigere Alternative zur herkömmlichen datenintensiven Online-Werbung, insbesondere aufgrund ihrer verbesserten Verarbeitungsgeschwindigkeit, geringeren Hardwareanforderungen und erheblichen Einsparung von Speicherplatz.

## Patentansprüche

1. Computerimplementiertes Verfahren zum Platzieren einer Werbeeinblendung auf einer Webseite, mit folgenden Verfahrensschritten:
(S1) Erfassen wenigstens eines Teils des jeweiligen Inhalts einer Mehrzahl von Webseiten,
(S2) Transformieren der erfassten Inhalte der erfassten Webseiten, um eine Beschreibung des Inhalts einer jeweiligen Webseite zu erhalten,
(S3) Erstellen von Webseiten-Gruppen, die Webseiten mit solchen Beschreibungen des jeweiligen Inhalts enthalten, die zueinander wenigstens in einem vorbestimmten Maß ähnlich sind,
(S4) Platzieren der gleichen Werbeeinblendung auf einer Mehrzahl von Webseiten einer ersten Webseiten-Gruppe und einer zweiten Webseiten-Gruppe,
(S5) Erfassen der Anzahl von Klicks auf die Werbeeinblendung auf der Mehrzahl von Webseiten der ersten Webseiten-Gruppe und Erfassen der Anzahl von Klicks auf die Werbeeinblendung auf der Mehrzahl von Webseiten der zweiten Webseiten-Gruppe in einem vorbestimmten Zeitraum,
(S6) Vergleichen der Anzahl von Klicks auf die Werbeeinblendung auf der Mehrzahl von Webseiten der ersten Webseiten-Gruppe und der Anzahl von Klicks auf die Werbeeinblendung auf der Mehrzahl von Webseiten der zweiten Webseiten-Gruppe und
(S7) weiteres Nutzen der Werbeeinblendung auf der Mehrzahl von Webseiten der Webseiten-Gruppe, für die die höhere Anzahl von Klicks auf die Werbeeinblendung erfasst worden ist, und Beenden des Nutzens der Werbeeinblendung auf der Mehrzahl von Webseiten der Webseiten-Gruppe, für die die geringere Anzahl von Klicks auf die Werbeeinblendung erfasst worden ist.

2. Computerimplementiertes Verfahren nach Anspruch 1, wobei das Platzieren der gleichen Werbeeinblendung auf einer Mehrzahl von Webseiten einer ersten Webseiten-Gruppe und einer zweiten Webseiten-Gruppe, das Erfassen der Anzahl von Klicks auf die Werbeeinblendung auf der Mehrzahl von Webseiten der ersten Webseiten-Gruppe und das Erfassen der Anzahl von Klicks auf die Werbeeinblendung auf der Mehrzahl von Webseiten der zweiten Webseiten-Gruppe, das Vergleichen der Anzahl von Klicks auf die Werbeeinblendung auf der Mehrzahl von Webseiten der ersten Webseiten-Gruppe und der Anzahl von Klicks auf die Werbeeinblendung auf der Mehrzahl von Webseiten der zweiten Webseiten-Gruppe und das weitere Nutzen der Werbeeinblendung auf der Mehrzahl von Webseiten der Webseiten-Gruppe, für die die höhere Anzahl von Klicks auf die Werbeeinblendung erfasst worden ist, und das Beenden des Nutzens der Werbeeinblendung auf der Mehrzahl von Webseiten der Webseiten-Gruppe, für die die geringere Anzahl von Klicks auf die Werbeeinblendung erfasst worden ist, wenigstens paarweise für eine Vielzahl von Webseiten durchgeführt wird.

3. Computerimplementiertes Verfahren nach Anspruch 1 oder 2, wobei das Transformieren der erfassten Inhalte der erfassten Webseiten, um eine Beschreibung des Inhalts einerjeweiligen Webseite zu erhalten, mittels eines Large Language-Modells durchgeführt wird.

4. Computerimplementiertes Verfahren nach einem der vorhergehenden Ansprüche, wobei die Beschreibung des Inhalts einer jeweiligen Webseite darüber erfolgt, dass ihr ein Vektor aus einem vorbestimmten Vektorraum zugeordnet wird, in dem linear unabhängige Vektoren solche Webseiten bezeichnen, deren Beschreibung des Inhalts nicht ähnlich zueinander sind.

5. Computerimplementiertes Verfahren nach Anspruch 4, wobei das Maß der Ähnlichkeit zwischen der Beschreibung des Inhalts zweier Webseiten über die Kosinus-Ähnlichkeit der Vektoren bestimmt wird, die den Inhalt der beiden Webseiten bezeichnen.

6. Computerimplementiertes Verfahren nach einem der vorhergehenden Ansprüche, wobei (S8) zusätzlich oder anstatt des weiteren Nutzens der Werbeeinblendung auf der Mehrzahl von Webseiten der Webseiten-Gruppe, für die die höhere Anzahl von Klicks auf die Werbeeinblendung erfasst worden ist, auf der Mehrzahl von Webseiten der Webseiten-Gruppe, für die die höhere Anzahl von Klicks auf die Werbeeinblendung erfasst worden ist, eine Werbeeinblendung erfolgt, deren Beschreibung ihres Inhalts wenigstens in einem vorbestimmten Maß ähnlich zu der Beschreibung des Inhalts der bereits genutzten Werbeeinblendung ist.

7. Computerimplementiertes Verfahren nach Anspruch 6, wobei um eine Beschreibung des Inhalts einer Werbeeinblendung zu erhalten, ein Transformieren des Inhalts der Werbeeinblendung, mittels eines Large Language-Modells durchgeführt wird.

8. Computerimplementiertes Verfahren nach Anspruch 7, wobei die Beschreibung des Inhalts einer jeweiligen Werbeeinblendung darüber erfolgt, dass ihr ein Vektor aus einem vorbestimmten Vektorraum zugeordnet wird, in dem linear unabhängige Vektoren solche Werbeeinblendung bezeichnen, deren Beschreibung des Inhalts nicht ähnlich zueinander sind.

9. Computerimplementiertes Verfahren nach Anspruch 8, wobei das Maß der Ähnlichkeit zwischen der Beschreibung des Inhalts zweier Werbeeinblendung über die Kosinus-Ähnlichkeit der Vektoren bestimmt wird, die den Inhalt der beiden Werbeeinblendung bezeichnen.

10. Nichtflüchtiges, computerlesbares Speichermedium mit darauf abgespeicherten Befehlen, die bei ihrer Ausführung auf einem Prozessor ein Verfahren nach einem der vorhergehenden Ansprüche bewirken.
